# EUROPEAN PATENT APPLICATION

(11) **EP 4 148 982 A1**
(43) Date of publication of application: **15.03.2023**
(21) Application number: 21798934.2
(22) Date of filing: 07.05.2021
(51) Int. Cl.: H02S 20/32, F24S 30/425

(54) **SUPPORT FOR PHOTOVOLTAIC MODULES**

(30) Priority: 07.05.2020 ES 202030830 U
(71) Applicant: Bonjoch Manonelles, Montserrat, 25400 Les Borges Blanques - Lleida (ES); Segura Alcaide, Maria Pilar, 08310 Argentona - Barcelona (ES); Ayllon Gomez, Lucio, 08251 Santpedor (ES)
(72) Inventor: Bonjoch Manonelles, Montserrat, 25400 Les Borges Blanques - Lleida (ES); Segura Alcaide, Maria Pilar, 08310 Argentona - Barcelona (ES); Ayllon Gomez, Lucio, 08251 Santpedor (ES)
(74) Representative: Espiell Gomez, Ignacio
(86) International application number: PCT/ES2021/070320
(87) International publication number: WO 2021/224535

(57) **Abstract**

A support for sun-tracker photovoltaic modules endowing the assembly thereof with simplicity and rapidity, making the assembly simple and reducing the number of components for the assembly thereof. Specifically, the modules (1) are delimited by a frame (2) destined to support a photovoltaic panel, and the tracker is equipped with a rotation shaft (3) having two lateral surfaces (4) and an upper surface (5) between the lateral surfaces (4), and a lower surface (6), where the support comprises a profiled stringer (31) destined to be attached perpendicularly to the rotation shaft (3) and to support at least one frame (2) equipped with an omega-shaped cross-section, two stiffeners (12) destined to be located on each side of the rotation shaft (3) respectively, and a platen (18) linkable to the two stiffeners (12) in such a way that the profiled stringer (31) is attached to the rotation shaft (3).

## Description

### OBJECT OF THE INVENTION

The present invention relates to a support for photovoltaic modules, preferably of a solar tracker or any other type of photovoltaic installation, provided with a rotating shaft, and wherein the support comprises a preferably metal rail which supports the modules, two brackets, and a flat which allows the rail to be secured to the rotating shaft.

More specifically, the module support provides simplicity and speed when assembling the rails on the rotating shaft in a predetermined position, making the assembly intuitive for the operators without there being any possibility of mechanical assembly error, in addition to facilitating logistics work and reducing components for the assembly thereof.

### BACKGROUND OF THE INVENTION

Solar trackers are known in the state of the art which allow solar panels to be rotated by orienting the position thereof as a function of the path of the sun, pivoting around a horizontal north-south axis of rotation. The rotational movement is generated by a drive element, usually by means of a motor, which rotates the rotating beam. A plurality of rails supporting photovoltaic panels and attached to the rotating beam by several attachment assemblies arranged along the rotating beam are installed in solar trackers.

However, for the installation of these attachment assemblies, qualified skilled labor is required to correctly fit the attachment assemblies to the modules and the rotating beams. Additionally, specific tools are needed to carry out the assembly and the attachment assemblies comprise a large number of parts.

### DESCRIPTION OF THE INVENTION

More particularly, the present invention relates to a support for photovoltaic modules of a solar tracker, wherein the modules are limited by a frame intended for supporting a photovoltaic panel and the tracker is provided with a rotating shaft provided with two side surfaces and an upper surface between the side surfaces and a lower surface.

The support comprises a rail intended for being linked in a manner perpendicular to the rotating shaft and for supporting at least one frame provided with an omega-shaped section comprising a valley sector intended for being arranged facing the rotating shaft and comprising cavities arranged in two contiguous rows, two side sectors extending in a perpendicular manner from the valley sector, and two fins extending in a perpendicular manner from each side sector comprising an outer surface intended for contacting the frame.

The support further comprises two brackets intended for being located on each side of the rotating shaft, respectively, provided with a securing surface provided with an upper end and a lower end, intended for contacting a side surface, an upper surface extending from the upper end comprising contiguous flanges extending in the direction opposite the securing surface which can be housed in the cavities, wherein the securing surfaces are intended for being arranged facing one another at a distance equal to the distance between the side surfaces. The support further comprises a flat which can be linked to the two brackets in the vicinity of the two lower ends.

In this way, the operator only has to introduce the flanges in the predefined cavities and fix the rail to the brackets for them to embrace the rotary shaft, being attached thereto by means of the flat. Therefore, without the use of tools or qualified personnel, it is ensured that the installation of the supports is correct. The rows of cavities are arranged such that, upon linking the brackets, they are arranged in a position embracing the rotating shaft, and at the same time centering the modules with respect to the rotating shaft. A plurality of supports for photovoltaic modules are used in a solar tracker.

The flanges can be die-cut claws comprising a first sector extending perpendicular to the upper surface and a second sector extending in a perpendicular manner from the first sector such that, in an assembly situation, the rotating shaft presses against them and they are retained as a result of this configuration without any possibility of disengaging from the cavities.

The brackets may comprise a lower surface extending from the lower end parallel to the upper surface and provided with a first hole and the flat is provided with two second holes configured for being arranged facing each first hole, the first hole being and the second hole being intended for housing an attachment element. In this way, the attachment between the brackets and the flat is optimized and can be readily detached when the support is to be disassembled. The first hole can be a grooved hole to prevent assembly errors.

The bracket may comprise a side surface inclined with respect to the securing surface joining the lower surface and the upper surface and may comprise a reinforcing sheet limited by the upper surfaces, the securing surface, the lower surface, and the side surface, providing robustness to the bracket.

The rail can be a deep-drawn or profiled galvanized steel sheet metal and can be manufactured with a profiling machine or by deep drawing or stamping. The outer surface is intended for contacting the frame and can be provided with a stop in the middle of the rotating shaft in the longitudinal direction for the purpose of centering the modules symmetrically thereon without using manual centering gauges.

The outer surface can be provided with a stop in the middle of the rotating shaft in the longitudinal direction, such that the modules can be located on each side of the stop centrally.

The outer surface may comprise a longitudinal ribbing extending in the direction opposite the frame and the support comprises a fastener intended for attaching the profiled rail and the frame, such that the fastener retains both the frame of the module and the profiled rail by simply hitting with a hammer. The fastener can be provided with an upper sector and a lower sector facing the upper sector, both being joined by a joining sector, wherein the lower sector comprises a notch for housing the longitudinal ribbing and the upper sector is intended for contacting the frame.

The upper sector may comprise a groove intended for housing an attachment element of the frame, which defines a mobile flange. The fastener can be symmetrical, that is, it comprises the groove and the cavity both in the upper sector and in the lower sector in order to prevent incorrect placement thereof.

The profiled rail may comprise two distal ends comprising at least one distal hole in each fin intended for housing a grounding connection, by means of a screw and an approved grounding element.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, the following has been represented:
Figure 1 shows a perspective view of a solar tracker provided with a support system for photovoltaic modules.
Figure 2 shows a section view of a support for photovoltaic modules and a rotating shaft.
Figure 3 shows a perspective view of a support for photovoltaic modules and a rotating shaft.
Figure 4 shows a perspective view of an attachment fastener for attachment between the frame and the profiled rail.

### PREFERRED EMBODIMENT OF THE INVENTION

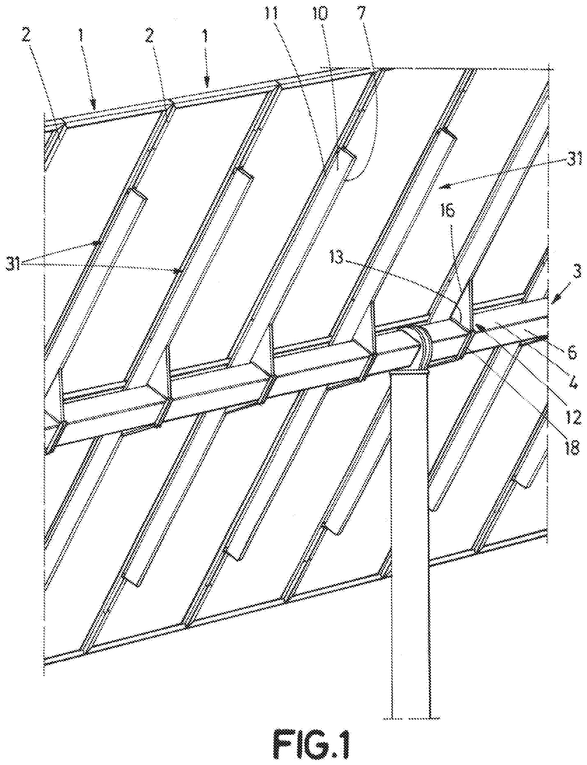

Figure 1 shows a perspective view of a solar tracker provided with a support system for photovoltaic modules (1) according to the present invention. The modules (1) are limited by a frame (2) intended for supporting a photovoltaic panel and the solar tracker is provided with a rotating shaft (3) provided with two side surfaces (4) and an upper surface (5) between the side surfaces (4) and a lower surface (6) opposite the upper surface (5).

The module support comprises a preferably metal profiled rail (31) intended for being linked in a manner perpendicular to the rotating shaft (3), perpendicular to the longitudinal direction thereof, and for supporting the modules (1) provided with an omega-shaped section comprising a valley sector (7) intended for being located facing the rotating shaft (3) and comprising cavities (8) arranged in two contiguous rows (9), not visible in the figure, two side sectors (10) extending in a perpendicular manner from the valley sector (7) and the fins (11) comprising an outer surface (26) intended for contacting the frame (2).

Additionally, the module support comprises two brackets (12) intended for being located on each side of the rotating shaft (3), respectively, provided with a securing surface (13) provided with an upper end (14) and a lower end (15), intended for contacting a side surface (4) and describing a shape complementary thereto.

The securing surfaces (13) are intended for being arranged facing one another at a distance equal to the width of the rotating shaft (3), that is, at a distance equal to the distance between the side surfaces (4). Preferably, the rotating shaft (3) is quadrangular, although it can also have a cross-section of any polygonal shape, such as octagonal or round, and the securing surface (13) is flat. The brackets (12) further comprise an upper surface (16) intended for contacting the valley sector (7) extending from the upper end (14) and comprising contiguous flanges (17) which extend in the direction opposite the securing surface (13) and can be housed in the cavities (8). The module support comprises a flat (18) which can be linked to the two brackets (12) in the vicinity of the two lower ends (15).

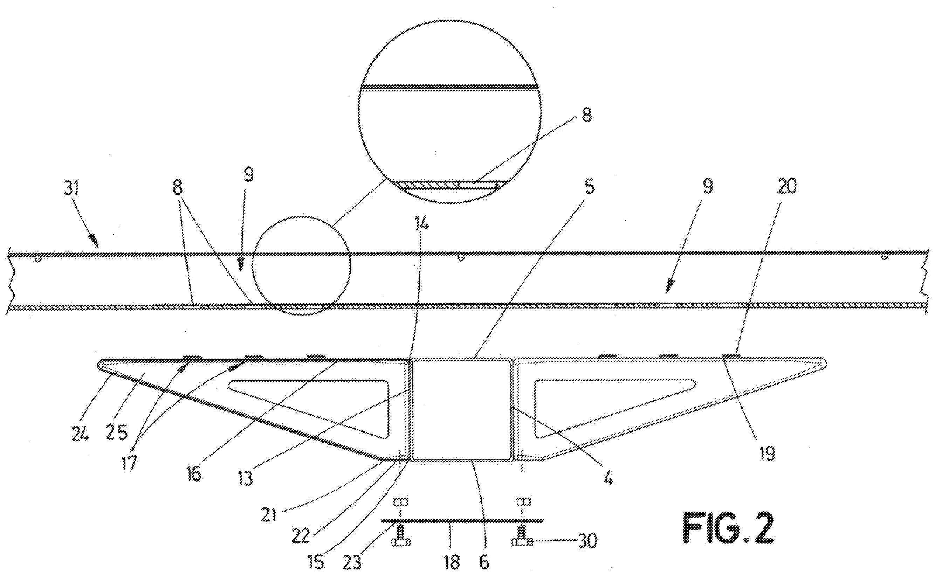

Figure 2 shows a section view of the support for photovoltaic modules and the rotating shaft (3) according to the present invention, in which the rail (31) provided with the cavities (8) arranged in two contiguous rows (9) and at a distance equal to the width of the rotating shaft (3) can be seen.

The flanges (17) are die-cut claws comprising a first sector (19) extending in a manner perpendicular to the upper surface (16) and a second sector (20) which extends in a perpendicular manner from the first sector (19) in the direction opposite the securing surface (13) and is partially perpendicular to the upper surface (16).

The brackets (12) comprise a lower surface (21) extending from the lower end (15) parallel to the upper surface (16) which are provided with first holes (22) and the support comprises the flat (18) provided with second holes (23), both holes (22, 23) being intended for housing an attachment element (30), wherein said attachment element (30) can be a screw, or a U-bolt with a fixing pin.

The brackets (12) comprise a side surface (24) inclined with respect to the securing surface (13) joining the lower surface (21) and the upper surface (16), wherein the bracket (12) comprises a reinforcing sheet (25) limited by the upper surface (16), the securing surface (13), the lower surface (21), and the side surface (24).

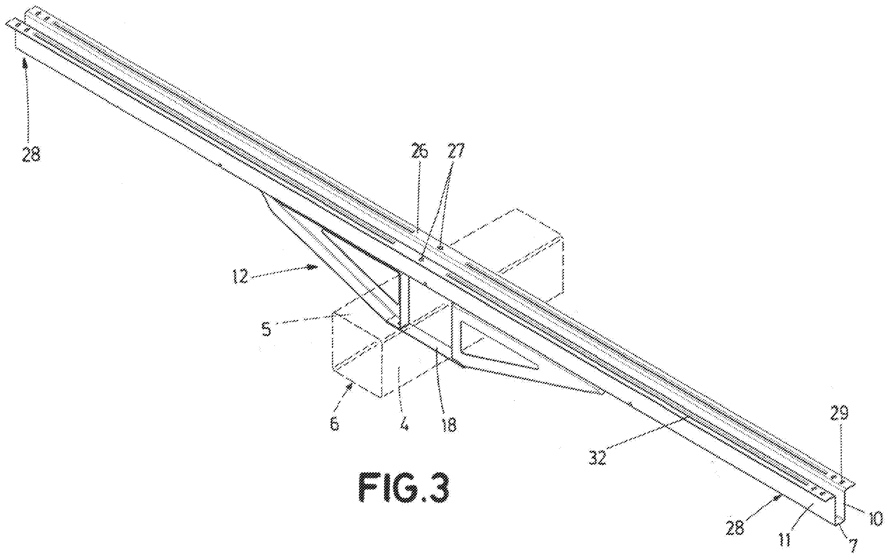

Figure 3 shows a perspective view of the support for photovoltaic modules and the rotating shaft (3) according to the present invention, in which it can be seen that the profiled rail (31) comprises two distal ends (28) comprising at least one distal hole (29) in each fin (11) intended for housing a grounding screw and attachment element of the module. Additionally, the outer surface (26) is provided with a stop (27) in the middle of the rotating shaft (3) in the longitudinal direction. Additionally, the outer surface (26) comprises a longitudinal ribbing (32) intended for being arranged parallel to the frame (2) and the bulging part of which extends towards the valley sector (7).

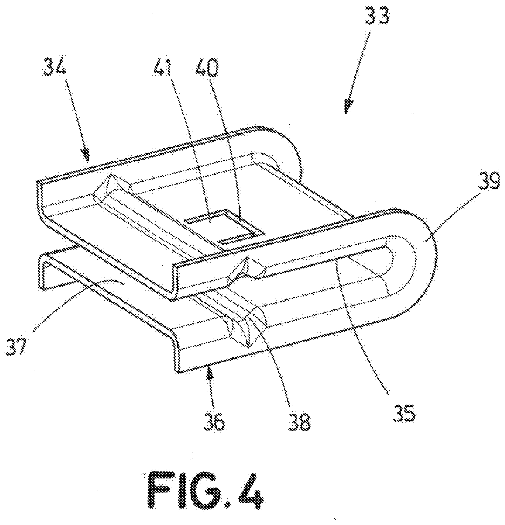

Figure 4 shows the fastener (33) according to the present invention, provided with an upper sector (34) and a lower sector (36) facing the upper sector (34), wherein the lower sector (36) comprises a notch (38) intended for housing the longitudinal ribbing (32) and the upper sector (34) is intended for contacting the frame (2). The lower sector (36) and the upper sector (34) are joined by a joining sector (39). The upper sector (34) comprises a groove (40) which defines a flange (41) intended for housing an attachment element of the frame (2). The fastener (33) is preferably symmetrical, so both sectors have the same elements.

## Claims

1. A support for photovoltaic modules of a solar tracker on a rotating shaft (3), wherein the photovoltaic modules (1) are limited by a frame (2) intended for supporting a photovoltaic panel and wherein the rotating shaft (3) provided with two side surfaces (4) and an upper surface (5) between the side surfaces (4) and a lower surface (6), **characterized in that** the support comprises:
- a rail (31) intended for being linked in a manner perpendicular to the rotating shaft (3) and for supporting at least one frame (2) comprising cavities (8) arranged in two contiguous rows (9) with each row being located on one side of the rotating shaft (3),
- two brackets (12) intended for being located on each side of the rotating shaft (3), respectively, provided with:
• a securing surface (13), provided with an upper end (14) and a lower end (15), intended for contacting a side surface (4) of the rotating shaft (3)
• an upper surface (16) extending from the upper end (14) comprising a row of contiguous flanges (17) extending in the direction opposite the securing surface (13) such that they fit into the cavities (8) of the rail (31);
such that once the two brackets (12) are located in the lower part of the rail (31) by causing the flanges (17) of the brackets (12) to coincide with the cavities (8) of the rail (31), and then by moving the brackets (12) towards the ends of the rail (31), the securing surfaces (13) of the brackets (12) are arranged facing one another at a distance equal to the distance between the side surfaces (4) of the rotating shaft (3) causing the brackets (12) to be locked with respect to the rail (31) when the assembly formed by the rail (31) and the brackets (12) is located on the rotating shaft (3).
- a flat (18) which can be linked to the two brackets (12) in the vicinity of the two lower ends (15).

2. The support according to claim 1, wherein the flanges (17) are die-cut claws comprising a first sector (19) extending perpendicular to the upper surface (16) and a second sector (20) extending in a perpendicular manner from the first sector (19).

3. The support according to claim 1, wherein the brackets (12) comprise a lower surface (21) extending from the lower end (15) parallel to the upper surface (16) and is provided with a first hole (22) and the flat (18) is provided with two second holes (23) configured for being arranged facing each first hole (22), and the holes (22, 23) are intended for housing an attachment element (30).

4. The support according to claim 3, wherein the first hole (22) is a grooved hole.

5. The support according to claim 1, wherein the bracket (12) comprises a side surface (24) inclined with respect to the securing surface (13) joining the lower surface (21) and the upper surface (16).

6. The support according to claim 5, wherein the bracket (12) comprises a reinforcing sheet (25) limited by the upper surface (16), the securing surface (13), the lower surface (21), and the side surface (24).

7. The support according to claim 1, wherein the rail (31) is a galvanized deep-drawn sheet metal provided with an omega-shaped section comprising:
a valley sector (7) intended for being located facing the rotating shaft (3) and comprising the cavities (8), two side sectors (10) extending in a perpendicular manner from the valley sector (7) and;
two fins (11) extending in a perpendicular manner from each side sector (10) comprising an outer surface (26) intended for contacting the frame (2).

8. The support according to claim 1, wherein the outer surface (26) is provided with a stop (27) in the middle of the rotating shaft (3) in the longitudinal direction.

9. The support according to claim 1, wherein the outer surface (26) comprises a longitudinal ribbing (32) projecting towards the valley sector (7) and the support comprises a fastener (33) intended for attaching the profiled rail (31) and the frame (2).

10. The support according to claim 9, wherein the fastener (33) is provided with an upper sector (34) and a lower sector (36) facing the upper sector (34) and joined by means of a joining sector (39), wherein the lower sector (36) comprises a notch (38) for housing the longitudinal ribbing (32) and the upper sector (34) is intended for contacting the frame (2).

11. The support according to claim 10, wherein the upper sector (34) comprises a groove (40) intended for housing an attachment element of the frame (2).

12. The support according to claim 9, wherein the fastener (33) is symmetrical.

13. The support according to claim 1, wherein the rail (31) comprises two distal ends (28) comprising at least one distal hole (29) in each fin (11) intended for housing a grounding screw for the frame (2) of the module (1).
